(19) Europäisches Patentamt

European Patent Office

Office européen des brevets

(11) **EP 1 131 830 B1**

(12) **EUROPÄISCHE PATENTSCHRIFT**

(45) Veröffentlichungstag und Bekanntmachung des Hinweises auf die Patenterteilung:
**10.05.2006 Patentblatt 2006/19**

(21) Anmeldenummer: **99963241.7**

(22) Anmeldetag: **15.11.1999**

(51) Int Cl.:
*H01F 38/28* *(2006.01)*      *H01F 1/153* *(2006.01)*

(86) Internationale Anmeldenummer:
**PCT/DE1999/003631**

(87) Internationale Veröffentlichungsnummer:
**WO 2000/030132 (25.05.2000 Gazette 2000/21)**

(54) **MAGNETKERN, DER ZUM EINSATZ IN EINEM STROMWANDLER GEEIGNET IST, VERFAHREN ZUR HERSTELLUNG EINES MAGNETKERNS UND STROMWANDLER MIT EINEM MAGNETKERN**

MAGNETIC CORE THAT IS SUITABLE FOR USE IN A CURRENT TRANSFORMER, METHOD FOR THE PRODUCTION OF A MAGNETIC CORE AND CURRENT TRANSFORMER WITH A MAGNETIC CORE

NOYAU MAGNETIQUE DESTINE A ETRE UTILISE DANS UN TRANSFORMATEUR D'INTENSITE, PROCEDE DE FABRICATION D'UN NOYAU MAGNETIQUE ET TRANSFORMATEUR D'INTENSITE EQUIPE D'UN TEL NOYAU

(84) Benannte Vertragsstaaten:
**AT BE CH CY DE DK ES FI FR GB GR IE IT LI LU MC NL PT SE**

(30) Priorität: **13.11.1998   DE 19852424**

(43) Veröffentlichungstag der Anmeldung:
**12.09.2001   Patentblatt 2001/37**

(73) Patentinhaber: **Vacuumschmelze GmbH
63450 Hanau (DE)**

(72) Erfinder:
• **OTTE, Detlef
   D-63584 Gründau (DE)**
• **PETZOLD, Jörg
   D-63486 Bruchköbel (DE)**

(74) Vertreter: **Schmuckermaier, Bernhard
   PAe Westphal, Mussgnug & Partner,
   Mozartstrasse 8
   80336 München (DE)**

(56) Entgegenhaltungen:
   **EP-A- 0 271 657          EP-A- 0 563 606**

EP 1 131 830 B1

**Beschreibung**

Die Erfindung betrifft einen Magnetkern, der zum Einsatz in einem Stromwandler geeignet ist, ein Verfahren zur Herstellung eines solchen Magnetkerns und einen Stromwandler mit einem solchen Magnetkern.

Zur Erfassung des Energieverbrauchs elektrischer Geräte und Anlagen in Industrie und Haushalt werden Energiezähler eingesetzt. Das älteste dabei gebräuchliche Prinzip ist das des Ferraris-Zählers. Der Ferraris-Zähler basiert auf der Energiezählung über die Rotation einer mit einem mechanischen Zählwerk verbundenen Scheibe, die durch die strom- bzw. spannungsproportionalen Felder entsprechender Feldspulen angetrieben wird. Für die Erweiterung der Funktionsmöglichkeiten von Energiezählern wie z.B. für Mehrtarifbetrieb oder Fernablesung werden elektronische Energiezähler eingesetzt, bei denen die Strom- und Spannungserfassung über induktive Strom- und Spannungswandler erfolgt.

Eine spezielle Anwendung, bei der eine besonders hohe Genauigkeit gefordert ist, ist die Erfassung der Energieströme im Bereich der Elektrizitätsversorgungsunternehmen. Hier müssen zum einen die von den jeweiligen Kraftwerken erzeugten und in die Hochspannungsnetze eingespeisten Energiemengen präzise bestimmt werden, zum anderen sind für die Abrechnung die wechselnden Anteile von Verbrauch oder Lieferung im Verkehr zwischen den Energieversorgungsunternehmen von großer Bedeutung. Die hierfür eingesetzten Energiezähler sind Multifunktions-Einbaugeräte, deren Eingangssignale für Strom und Spannung aus dem jeweiligen Hoch- und Mittelspannungsanlagen über Kaskaden von Strom- und Spannungswandlern abgegriffen werden und deren Ausgangssignale zur digitalen und graphischen Registrierung bzw. Anzeige sowie zu Steuerungszwecken in den Schaltwarten dienen. Dabei dienen die netzseitig ersten Wandler zur potentialgetrennten Transformation der hohen Strom- und Spannungswerte, z.B. 1 bis 100 kA und 10 bis 500 kV, auf in Schaltschränken handhabbare Werte, die zweiten transformieren diese im eigentlichen Energiezähler auf die von der Meßelektronik benötigten Signalpegel im Bereich weniger 10 bis 100 mV.

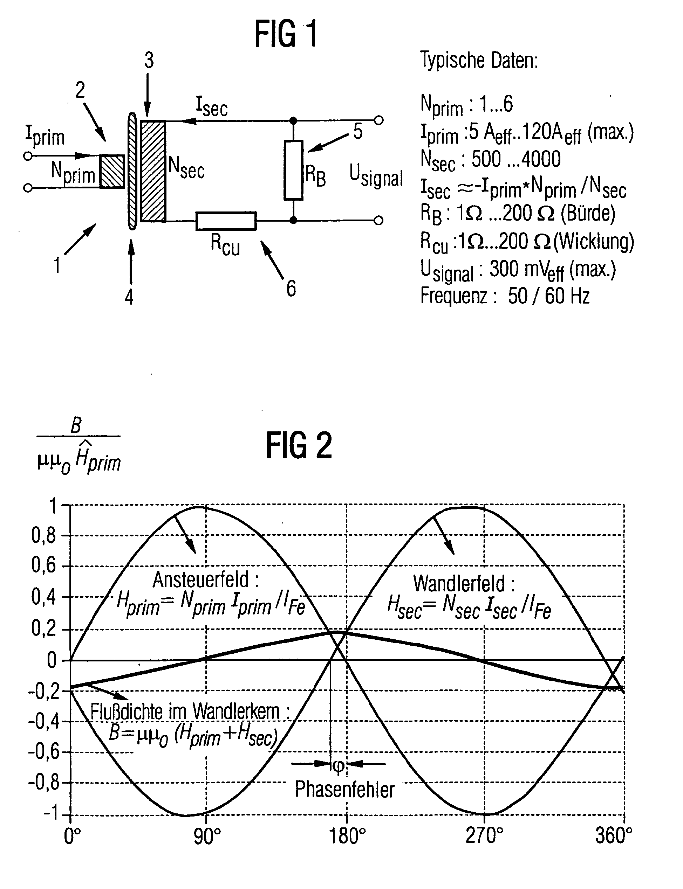

Die Figur 1 zeigt ein Ersatzschaltbild eines solchen Stromwandlers und die Bereiche der technischen Daten, wie sie in verschiedenen Anwendungen auftreten können. Gezeigt ist hier ein Stromwandler 1. Auf einem Magnetkern 4, der aus einem nanokristallinen weichmagnetischen Band aufgebaut ist, befindet sich die Primärwicklung 2, die den zu messenden Strom $I_{prim}$ führt und eine Sekundärwicklung 3, die den Meßstrom $I_{sec}$ führt. Der Sekundärstrom $I_{sec}$ stellt sich automatisch so ein, daß die Amperewindungen primär und sekundär im Idealfall gleich groß und entgegengesetzt gerichtet sind. Der Verlauf der Magnetfelder in einem solchen Stromwandler ist in der Figur 2 dargestellt, wobei Verluste im Magnetkern nicht berücksichtigt sind. Der Strom in der Sekundärwicklung 3 stellt sich dann nach dem Induktionsgesetz so ein, daß er die Ursache seiner Entstehung, nämlich die zeitliche Änderung des magnetischen Flusses im Magnetkern 4, zu hindern versucht.

Im idealen Stromwandler ist daher der Sekundärstrom, multipliziert mit dem Verhältnis der Windungszahlen, negativ gleich dem Primärstrom, was durch Gleichung (1) veranschaulicht wird:

$$I_{sec}^{ideal} = -I_{prim} * (N_{prim} / N_{sec}) \qquad (1)$$

Dieser Idealfall wird wegen der Verluste im Bürdenwiderstand 5, im Kupferwiderstand 6 der Sekundärwicklung und im Magnetkern 4 nie erreicht.

Im realen Stromwandler weist daher der Sekundärstrom gegenüber der obigen Idealisierung einen Amplitudenfehler und einen Phasenfehler auf, was durch Gleichung (2) beschrieben wird:

$$Amplitudenfehler : F(I) = \frac{I_{sec}^{real} - I_{sec}^{ideal}}{I_{sec}^{ideal}}; \; Phasenfehler : \varphi(I) = \phi(I_{sec}^{real}) - \phi(-I_{prim}) \qquad (2)$$

Die Ausgangssignale eines solchen Stromwandlers werden digitalisiert, multipliziert, integriert und gespeichert. Das Ergebnis ist eine elektrische Größe, die für die genannten Zwecke zur Verfügung steht.

Die zur Energiezählung in diesen Anwendungen eingesetzten elektronischen Energiezähler arbeiten "indirekt", so daß nur rein bipolare, nullsymmetrische Wechselströme im Zähler selbst gemessen werden müssen. Dazu dienen Stromwandler, die mit Magnetkernen aus hochpermeablen Werkstoffen aufgebaut sind und zur Erreichung geringer Meßfehler über einen kleinen Phasenfehler φ mit sehr vielen, d.h. typischerweise 2500 und mehr, Sekundärwindungen ausgestattet sein müssen.

Für die Abbildung rein bipolarer Ströme sind Stromwandler bekannt, deren Magnetkerne aus hochpermeablen kristallinen Legierungen, insbesondere Nickel-Eisen-Legierungen, bestehen, die ca. 80 Gew.% Nickel enthalten und unter dem Namen "Permalloy" bekannt sind. Diese weisen einen grundsätzlich sehr niedrigen Phasenfehler φ auf. Sie haben dabei aber den Nachteil, daß dieser Phasenfehler φ stark mit dem zu messenden Strom $I_{prim}$, was gleichbedeutend mit der Aussteuerung des Wandlerkerns ist, variiert. Für eine präzise Strommessung bei wechselnden Lasten mit diesen Wandlern ist daher eine aufwendige Linearisierung im Energiezähler erforderlich.

Des weiteren sind Stromwandler bekannt, die auf der Basis eisenloser Luftspulen arbeiten. Dieses Prinzip ist als sogenanntes Rogowski-Prinzip bekannt. Hierbei entfällt der Einfluss der Aussteuerung auf den Phasenfehler. Da die Anforderungen an die Störsicherheit solcher Stromwandler jedoch sehr hoch sein müssen, um eine eichfähige Energiezählung zu ermöglichen, sind diese Konstruktionen mit aufwendigen Abschirmungen gegen äußere Felder ausgestattet, was einen hohen Material- und Montageaufwand bedeutet und daher kostenintensiv ist.

Ferner sind Lösungen bekannt, bei denen ein mit einem Luftspalt versehener (gescherter) Ferrit-Schalenkern als Magnetkern eingesetzt wird. Diese Stromwandler verfügen über eine sehr gute Linearität, jedoch ist aufgrund der relativ niedrigen Permeabilität der Ferrite eine sehr hohe Windungszahl in Verbindung mit einem sehr großvolumigen Magnetkern erforderlich, um bei dem Stromwandler einen geringen Phasenwinkel zu erzielen. Diese auf Ferrit Schalenkernen basierenden Stromwandler weisen ferner ebenfalls eine hohe Empfindlichkeit gegenüber externen Fremdfeldern auf, so dass auch dort Abschirmmaßnahmen getroffen werden müssen. Außerdem sind bei Ferriten in der Regel die Magnetwerte stark temperaturabhängig.

Die EP-A-0 271 657 offenbart hierzu Wickelkerne aus amorphen magnetischen Legierungen, die in den Zusammensetzungsbereich $Fe_aCo_bCu_cSi_dB_eM_f$ fallen, worin M zumindest eines der Elemente V, Nb, Ta, Ti, Mo, W, Zr und Hf ist, a, b, c, d, e, f in Atom-% angegeben sind, und wobei a, b, c, d, e und f die Bedingungen $0,5 \leq c \leq 2$; $6,5 \leq d \leq 18$; $5 \leq e$ 14; $1 \leq f \leq 6$; mit $d + e > 18$ und $0 \leq b \leq 15$, wobei $a + b + c + d + e + f = 100$ erfüllen.

Der Erfindung liegt die Aufgabe zugrunde, einen Magnetkern anzugeben, der bei Einsatz in einem Stromwandler im Vergleich zum Stand der Technik eine höhere Messgenauigkeit eines zu messenden Stroms bei gleichzeitig wirtschaftlicher Ausführung und kompakter Baugröße gestattet. Ferner soll ein Verfahren zur Herstellung eines solchen Magnetkerns sowie ein Stromwandler mit einem solchen Magnetkern angegeben werden.

Darüber hinaus soll die Temperaturabhängigkeit der Eigenschaften möglichst gering sein.

Die Aufgabe wird gelöst durch einen Magnetkern, der zum Einsatz in einem Stromwandler geeignet ist, dadurch gekennzeichnet, dass er aus einem gewickelten Band aus einer ferromagnetischen Legierung besteht, bei der mindestens 50% der Legierung von feinen kristallinen Teilchen mit einer mittleren Teilchengröße von 100 nm oder weniger eingenommen wird (nanokristalline Legierung), er eine Sättigungspermeabilität aufweist, die größer als 12000, besser 20000, und kleiner als 300000, besser 350000, ist, er eine Sättigungsmagnetostriktion aufweist, deren Betrag kleiner als 1 ppm ist, er im wesentlichen frei von mechanischen Spannung ist, und er eine magnetische Anisotropieachse aufweist, entlang der sich die Magnetisierung des Magnetkerns besonders leicht ausrichtet und die senkrecht zu einer Ebene ist, in der eine Mittellinie des Bandes verläuft. Die Legierung weist eine Zusammensetzung auf, die im wesentlichen aus der Formel

$$Fe_aCo_bCu_cSi_dB_eM_f$$

besteht, worin M zumindest eines der Elemente V, Nb, Ta, Ti, Mo, W, Zr und Hf ist, a, b, c, d, e, f in Atom-% angegeben sind, und wobei a, b, c, d, e und f die folgenden Bedingungen erfüllen :

$0,5 \leq c \leq 2$; $6,5 \leq d \leq 18$; $5 \leq e$ 14; $1 \leq f \leq 6$;

mit $d + e > 18$ und $0 \leq b \leq 15$, wobei $a + b + c + d + e + f = 100$ sind.

Erfindungsgemäß wird das Band dabei so hergestellt, dass es eine kleine effektive Rauhtiefe aufweist. Dadurch lassen sich ein besonders gutes Remanenzverhältnis und damit eine besonders gute Linearität des Stromwandlers erzielen. Es hat sich gezeigt, dass 7 % als oberer Grenzwert für die effektive Rauhtiefe besonders gut ist, wobei jedoch mit abnehmender effektiver Rauhtiefe die Streuung aber auch der Betrag der Remanenz kleiner wird und damit die Stabilität der Linearität signifikant zunimmt.

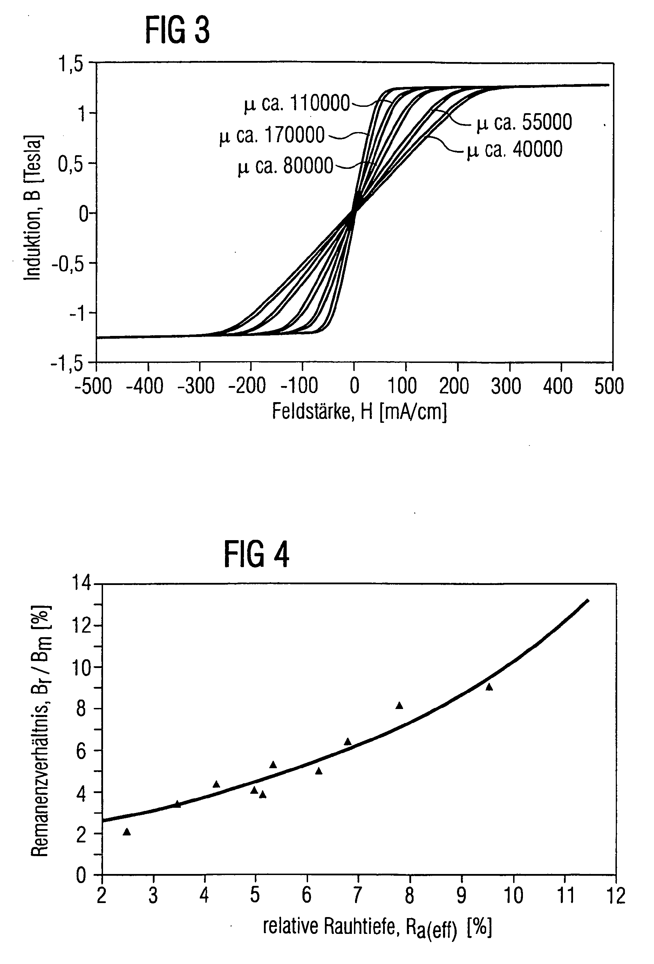

Die Rauhtiefe der Oberflächen des Bandes und auch die Banddicken sind wesentliche Einflussgrößen auf die magnetischen Eigenschaften. Maßgeblich ist die effektive Rauhtiefe. Unter der effektiven Rauhtiefe versteht man die Summe der mittleren Rauhtiefen Ra der beiden sich gegenüberliegenden Bandoberflächen dividiert durch die Banddicke. Die Figur 4 zeigt sehr anschaulich, dass sich das Remanenzverhältnis und damit die Linearität der Stromwandler durch Einstellung der Rauhtiefe einstellen lässt.

Die Permeabilität bezieht sich auf eine in der Ebene der Mittellinie des Bandes angelegte Feldstärke und die hierdurch hervorgerufene Induktion.

Es hat sich gezeigt, dass bei einem solchen Magnetkern die Abhängigkeit der Permeabilität von der Magnetisierung sehr klein ist. Die Hystereseschleife des Magnetkerns ist also sehr schmal und linear. Dies setzt ein möglichst kleines Verhältnis von Remanenzinduktion zu Sättigungsinduktion von möglichst weniger als 5 % und kleine Koerzitivfeldstärken von möglichst weniger als 10 mA/cm, besser 5 mA/cm voraus.

Da die Permeabilität mit über 12.000 sehr groß ist und zudem im wesentlichen unabhängig von der Magnetisierung ist, sind der absolute Phasenfehler und der absolute Amplitudenfehler eines Stromwandlers mit einem solchen Magnetkern sehr klein. Der absolute Amplitudenfehler kann kleiner als $1^0/_{00}$ sein. Der absolute Phasenfehler kann kleiner als 0,1˚ sein.

Der Stromwandler weist neben dem Magnetkern mindestens eine Primärwicklung und eine Sekundärwicklung, zu der ein Bürdenwiderstand parallel geschaltet ist und der den Sekundärstromkreis niederohmig abschließt, auf.

Es hat sich ferner gezeigt, daß die Hystereseschleife des Magnetkerns eine hohe Linearität aufweist. So betragen ein Permeabilitätsverhältnis $\mu_{15}/\mu_4 < 1,1$ und ein Permeabilitätsverhältnis $\mu_{10}/\mu_{0,5} < 1,1$, wobei $\mu_{0,5}$, $\mu_4$, $\mu_{10}$ und $\mu_{15}$ die Permeabilitäten bei einer Feldamplitude H von 0.5, 4, 10 und 15 mA/cm sind.

Aufgrund der guten Linearität weisen der Phasen- sowie der Amplitudenfehler im wesentlichen keine Abhängigkeit vom zu messenden Strom auf. Aufgrund der hohen Sättigungsinduktion von beispielsweise 1,2 Tesla gilt dies im Gegensatz zu anderen weichmagnetischen hochpermeablen Werkstoffen für einen weiteren Feldstärken- bzw. Induktionsbereich.

Da der absolute Phasenfehler, der absolute Amplitudenfehler und die Abhängigkeit der Fehler vom zu messenden Strom sehr klein sind, kann durch den Stromwandler eine sehr exakte Stromerfassung erfolgen.

Aufgrund der nanokristallinen Struktur weist der Magnetkern eine überraschend hohe Alterungsbeständigkeit auf, die eine obere Anwendungsgrenztemperatur für den Magnetkern von über 120˚C, in Einzelfällen sogar um 150˚C erlaubt. Gerade dadurch eignet sich der Stromwandler mit dem Magnetkern für einen Einsatz weit oberhalb der Raumtemperatur.

Die Eigenschaften des Magnetkerns sind nur schwach temperaturabhängig, wobei diese Abhängigkeit wiederum weitgehend linear verläuft.

Der Erfindung liegt die Erkenntnis zugrunde, daß mit der Legierung der beschriebenen Zusammensetzung durch eine geeignete Wärmebehandlung ein Magnetkern mit den beschriebenen Eigenschaften erzeugt werden kann. Dabei sind sehr viele Parameter aufeinander abgestimmt, damit der Magnetkern die beschriebenen Eigenschaften aufweist.

Durch die bei der Wärmebehandlung erzeugte nanokristalline Zweiphasenstruktur werden bei gleichzeitig hoher Sättigungsinduktion und hoher thermischer Stabilität die beiden grundlegenden Voraussetzungen für gute weichmagnetische Eigenschaften erfüllt:

1) Eliminierung, d.h. Ausmittelung der Kristallanisotropie $K_1$ durch die glättende Wirkung der kornübergreifenden ferromagnetischen Austauschwechselwirkung.
2) Weitestgehende Einstellung des Nulldurchgangs der Sättigungsmagnetostriktion $\lambda_S$ ($\lambda_S < 1$ppm) durch Überlagerung der beiden Magnetostriktionsbeiträge von nanokristallinem Korn und amorpher intergranularer Restphase.

Da hierdurch die im Band bzw. Magnetkern verbleibenden Störanisotropien bis auf ca. 2 J/m$^3$ oder noch weniger eliminiert werden, können bereits bei sehr kleinen uniaxialen magnetfeldinduzierten Queranisotropien hochlineare Hystereseschleifen (F-Schleifen) mit höchsten Permeabilitäten erzeugt werden.

Im folgenden wird eine Wärmebehandlung, die ein Verfahren zur Herstellung eines Magnetkerns ist und ebenfalls die Aufgabe löst, beschrieben:

Nach Herstellung und Wicklung des Bandes zum Magnetkern wird der Magnetkern auf eine Zieltemperatur zwischen 450˚C und 600˚ C erhitzt. Vorzugsweise liegt die Zieltemperatur oberhalb 520˚C. Dabei wird ausgehend von einem amorphem Zustand des Bandes die nanokristalline Zweiphasenstruktur ausgebildet.

Nachdem die nanokristalline Zweiphasenstruktur ausgebildet wurde, wird zur Bildung der Anisotropieachse bei einer Temperatur unterhalb der Curie-Temperatur der Legierung ein Magnetfeld von mindestens 100 A/cm eingeschaltet, das transversal zur Richtung des gewickelten Bandes steht (Querfeld). Dieses Querfeld muß so groß sein, daß sich der Kern in Richtung der auszubildenden Anisotropieachse im Zustand seiner Sättigungsinduktion befindet. Die Curie-Temperatur ist die Temperatur, bei der eine spontane Magnetisierung der Legierung einsetzt.

Die Zieltemperatur ist so gewählt, daß sie oberhalb der Kristallisationstemperatur der Legierung liegt. Sie wird derart an die Legierungszusammensetzung angepaßt, daß aufgrund der sich einstellenden Korngrößenverteilung und Volumenerfüllung des Korns eine möglichst gute Ausmittelung der Kristallanisotropie $K_1$ entsteht. Gleichzeitig sollen sich die Magnetostriktionsbeiträge von nanokristallinem Korn und amorpher Restphase derartig ausgleichen, daß die resultierende Sättigungsmagnetostriktion sehr klein ist oder möglichst ganz verschwindet.

Gleichzeitig bewirkt das Erhitzen einen Abbau mechanischer Spannungen im Band und im gewickelten Magnetkern, so daß die Entstehung des nanokristallinen Korns im spannungsfreien Zustand stattfindet und keine spannungsinduzierten Anisotropien entstehen können.

Eine besonders hohe Linearität der Hystereseschleife läßt sich erzielen, wenn das Verhältnis des mechanischen elastischen Spannungstensors des Magnetkerns multipliziert mit der Sättigungsmagnetostriktion zur uniaxialen Anisotropie kleiner als 0,5 ist.

Die Feldstärke des senkrecht zum gewickelten Band angelegten Magnetfeldes (Querfeld) ist derart gewählt, daß es deutlich größer ist als die zum Erreichen der Sättigungsinduktion in dieser Richtung des Kerns notwendigen Feldstärke. Diese ist in der Regel größer als 100 A/cm.

Es liegt im Rahmen der Erfindung, zwei aufeinanderfolgende Wärmebehandlungen durchzuführen. Die erste Wärmebehandlung dient der Ausbildung der nanokristallinen Zweiphasenstruktur. Die zweite Wärmebehandlung kann bei einer niedrigeren Temperatur als die erste Wärmebehandlung erfolgen und dient der Ausbildung der Anisotropieachse. Alternativ wird in derselben Wärmebehandlung zunächst die nanokristalline Zweiphasenstruktur ausgebildet und anschließend die Anisotropieachse induziert.

Werden z.B. Permeabilitäten im unteren Bereich des angegebenen Fensters von 12000 - 300000 gefordert, kann die Erzeugung der nanokristallinen Struktur und die Ausbildung der Anisotropieachse auch gleichzeitig erfolgen. Hierzu wird der Magnetkern auf die Zieltemperatur erhitzt, dort bis zur Ausbildung der nanokristallinen Struktur gehalten und danach wieder auf Raumtemperatur abgekühlt. Je nach erforderlicher Permeabilität wird das Querfeld entweder während der gesamten Wärmebehandlung angelegt oder erst nach Erreichen der Zieltemperatur oder sogar noch später eingeschaltet.

Das Erhitzen auf die Zieltemperatur erfolgt möglichst schnell. Beispielsweise erfolgt das Erhitzen auf die Zieltemperatur mit einer Rate zwischen 1 bis 15 K/min. Zur Erzielung eines inneren Temperaturausgleiches im Kern kann dabei im Temperaturbereich der einsetzenden Kristallisation eine verzögerte Aufheizrate unter 1 K/min oder sogar ein mehrminütiges Temperaturplateau eingelegt werden.

Der Magnetkern wird beispielsweise zwischen 4 Minuten und 8 Stunden auf der Zieltemperatur um 550 ˚C gehalten, um ein möglichst kleines Korn mit homogener Korngrößenverteilung und kleinen intergranularen Abständen zu erreichen. Die Temperatur wird dabei umso höher gewählt, je niedriger der Si- Gehalt in der Legierung ist. Dabei stellt beispielsweise das Einsetzen unmagnetischer Boridphasen oder das Wachsen von Oberflächenkristalliten auf dem Band eine Obergrenze für die Zieltemperatur dar.

Zur Einstellung der Anisotropieachse und damit der linearen Hystereseschleife (F-Schleife) wird der Magnetkern zwischen 0,1 und 8 Stunden unterhalb der Curie-Temperatur, z.B. zwischen 260 ˚C und 590 ˚C bei eingeschaltetem transversalem Magnetfeld gehalten. Die hierbei induzierte uniaxiale Anisotropie ist umso größer je höher die Temperatur im Querfeld gewählt wird. Das Permeabilitätsniveau verhält sich dazu reziprok, so daß bei den niedrigsten Temperaturen die höchsten Werte entstehen. Anschließend wird der Kern z.B. mit 0,1 bis 5 K/min im anliegenden Querfeld auf raumtemperaturnahe Werte von z.B. 25 ˚C oder z.B. 50 ˚C abgekühlt. Dies ist einerseits aus wirtschaftlichen Gründen vorteilhaft, andererseits kann aus Linearitätsgründen unterhalb der Curie-Temperatur nicht feldfrei abgekühlt werden kann.

Das Magnetfeld kann während der gesamten Wärmebehandlung eingeschaltet sein.

Die Zusammensetzung der Legierung wird derart gewählt, daß einerseits eine möglichst gute Ausmittelung der Kristallanisotropie des nanokristallinen Korns erfolgt, andererseits aber der Nulldurchgang der Sättigungsmagnetostriktion möglichst gut getroffen wird. Gleichzeitig darf jedoch der Metalloidgehalt nicht zu hoch angesetzt werden, da hierdurch das Band versprödet und Gießbarkeit, Wickelbarkeit und Schneidbarkeit des Bandes verloren gehen. Andererseits soll jedoch die Kristallisationstemperatur möglichst hoch sein, damit z.B. während des Gießprozesses des Bandes keine Keime für Oberflächenkristallite entstehen, die für die Linearität der Schleife äußerst schädlich sind. Letzteres läßt sich in gewissen Grenzen z.B. durch erhöhte Gehalte an B und/oder Nb erreichen.

Aufgrund der hohen Permeabilität kann der Stromwandler bei zugleich exakter Stromerfassung ein besonders kleines Volumen aufweisen.

Eine weitere Verbesserung hinsichtlich der Linearität der Hystereseschleife des Magnetkerns und damit des Übertragungsverhaltens des Stromwandlers läßt sich erzielen, wenn der Magnetkern einen Magnetostriktionswert $|\lambda_S|$ < 0,2 ppm aufweist und der Magnetkern eine nanokristalline, ferromagnetische Legierung enthält, die eine Zusammensetzung aufweist, die im wesentlichen aus der Formel

$$Fe_a Co_b Cu_c Si_d B_e M_f$$

besteht, worin M zumindest eines der Elemente V, Nb, Ta, Ti, Mo, W, Zr und Hf ist, a, b, c, d, e, f in Atom-% angegeben sind und a, b, c, d, e und f die folgenden Bedingungen erfüllen:

$c = 1$; $14 \leq d \leq 17$; $5 \leq e \leq 14$; $2 \leq f \leq 4$; mit $22 \leq d + e \leq 24$ und $0 \leq b \leq 0.5$, wobei $a + b + c + d + e + f = 100$ sind.

Die obengenannten Legierungssysteme zeichnen sich durch sehr lineare, ausgesprochen schmale Hystereseschleifen aus und weisen je nach dabei eingestellter uniaxialer Anisotropie $K_u$ bei einer Feldamplitude von $\hat{H}$ = 4 mA/cm eine Permeabilität von $12000 < \mu_4 < 300000$ auf. In Figur 3 sind Hystereseschleifen von Magnetkernen aus einigen der obengenannten Legierungssysteme gezeigt. Diese Legierungssysteme sind nahezu magnetostriktionsfrei. Die Magnetostriktion wird vorzugsweise durch eine Wärmebehandlung eingestellt, so daß lineare Hystereseschleifen mit einem aufgrund der hohen Sättigungsinduktion von $B_S$ = 1,1 bis 1,4 T weiträumig nutzbaren Induktionsbereich und einem sehr guten Frequenzgang bezüglich der Permeabilität und niedrigen Ummagnetisierungsverlusten herstellbar sind.

Bei dem oben erwähnten bevorzugten nanokristallinen Legierungssystem wird durch eine exakt abgeglichene Temperatur-Haltezeitfunktion ausgenutzt, daß sich bei den erfindungsgemäß eingesetzten Legierungszusammensetzungen gerade die Magnetostriktionsbeiträge von feinkristallinem Korn und amorpher Restphase ausgleichen und die erforderliche Magnetostriktionsfreiheit entsteht.

Vorzugsweise weist der Magnetkern keinen Luftspalt auf. Ein Stromwandler mit einem Magnetkern ohne Luftspalt weist eine besonders hohe Immunität gegenüber externen Fremdmagnetfeldern ohne zusätzliche Abschirmmaßnahmen auf. Der Magnetkern ist beispielsweise ein geschlossener, luftspaltloser Ringkern, Ovalkern oder Rechteckkern. Weist der Kern eine Rotationssymmetrieachse auf, so ist die Anisotropieachse parallel zur Rotationssymmetrieachse. Auf jeden Fall steht diese Anisotropieachse möglichst exakt senkrecht zur Richtung des gewickelten Bandes.

Zur Erzeugung des Magnetkerns kann das Band rund gewickelt werden und falls erforderlich mittels geeigneter Formgebungswerkzeuge während der Wärmebehandlung in die entsprechende Form gebracht werden.

Besonders kleine Koerzitivfeldstärken und damit eine besonders gute Linearität der Hystereseschleife werden erzielt, wenn das Band zumindest an einer Oberfläche mit einer elektrisch isolierenden Schicht versehen ist. Dies bewirkt einerseits eine bessere Entspannung des Magnetkerns, andererseits lassen sich auch besonders niedrige Wirbelstromverluste erreichen.

Das Band wird beispielsweise vor dem Wickeln an mindestens einer seiner beiden Oberflächen mit der elektrisch isolierenden Schicht versehen. Hierfür wird je nach Anforderung an die Güte der isolierenden Schicht, ein Tauch-, Durchlauf-, Sprüh- oder Elektrolyseverfahren am Band eingesetzt.

Alternativ wird der gewickelte Magnetkern vor Erhitzen auf die Zieltemperatur einer Tauchisolation unterzogen, so daß das Band mit der elektrisch isolierenden Schicht versehen wird. Als besonders vorteilhaft hat sich ein Tauchverfahren bei Unterdruck herausgestellt.

Bei der Auswahl des isolierenden Mediums ist darauf zu achten, daß dieses einerseits auf der Bandoberfläche gut haftet, andererseits keine Oberflächenreaktion verursacht, die zu einer Schädigung der Magneteigenschaften führen kann. Bei den hier in Rede stehenden Legierungen haben sich Oxide, Acrylate, Phosphate, Silikate und Chromate der Elemente Calzium, Magnesium, Aluminium, Titan, Zirkonium, Hafnium, Silizium als wirkungsvolle und verträgliche Isolatoren herausgestellt. Besonders effektiv ist dabei Magnesium, welches als flüssiges magnesiumhaltiges Vorprodukt auf die Bandoberfläche aufgebracht wird und sich während einer speziellen, die Legierung nicht beeinflussenden Wärmebehandlung in eine dichte magnesiumhaltige Schicht umwandelt, deren Dicke D je nach Verarbeitung ungefähr zwischen 25 nm und 3 um liegen kann. Bei den Temperaturen der oben beschriebenen Magnetfeldwärmebehandlung entsteht dann die eigentliche Isolatorschicht aus Magnesiumoxid.

Die Sekundärwicklung des Stromwandlers kann eine Windungszahl aufweisen, die kleiner oder gleich 2200 ist. Die Primärwicklung des Stromwandlers kann eine Windungszahl aufweisen, die gleich drei ist. Der Stromwandler kann für einen Primärstrom ausgelegt sein, der kleiner oder gleich 20A beträgt.

Das Band wird zunächst in amorphem Zustand mittels Rascherstarrungstechnologie hergestellt, wie sie z. B. in der EP 0 271 657 B1 beschrieben ist, und dann auf speziellen Maschinen spannungsfrei zum Magnetkern in seinen Endabmessungen gewickelt. Aufgrund der hohen Linearitätsanforderungen an die Hystereseschleife des Magnetkerns wird vorzugsweise besondere Sorgfalt im Hinblick auf Spannungsfreiheit aufgewendet.

Besonders gleichmäßige und lineare Hystereseschleifen werden dann erreicht, wenn mehrere Magnetkerne während der Wärmebehandlung im Magnetfeld stirnseitig exakt so aufgestapelt sind, dass die Stapelhöhe das Mehrfache des Magnetkernaußendurchmessers beträgt. Die Hystereseschleife entwickelt sich dabei umso steiler, je niedriger die Temperatur im magnetischen Querfeld angesetzt wird.

Je nach Legierung ist die Wärmebehandlung im Vakuum oder in einem inerten oder reduzierenden Schutzgas durchzuführen. In allen Fällen sind materialspezifische Reinheitsbedingungen zu berücksichtigen, die fallweise durch entsprechende Hilfsmittel wie elementspezifische Absorber- oder Gettermaterialien herbeizuführen sind.

Nach der Wärmebehandlung wird der Magnetkern schließlich verfestigt, z. B. durch Tränken, Beschichten, Umhüllen mit geeigneten Kunststoffmaterialien und/oder Verkapselung und mit jeweils mindestens der Sekundärwicklung des Stromwandlers versehen.

Im folgenden wird ein Ausführungsbeispiel der Erfindung anhand der Figuren näher erläutert.

Figur 5      zeigt im Vergleich die Abhängigkeit der Permeabilitäten des erfindungsgemäßen Magnetkerns und der von Permalloy-Kernen von einer Induktionsamplitude, die durch ein erregendes Magnetfeld erzeugt wird.

Figur 6      zeigt die Abhängigkeit des Amplitudenfehlers und des Phasenfehlers vom zu messenden Strom.

Figur 7      zeigt schematisch den Magnetkern, der aus einem Band mit einer isolierenden Schicht besteht, und seine Anisotropieachse.

Figur 8    zeigt die Temperaturabhängigkeit der Permeabilität des Magnetkerns bei einem Permeabilitätsniveau von ca. 80000 im Vergleich mit der einiger typischer Ferrite.

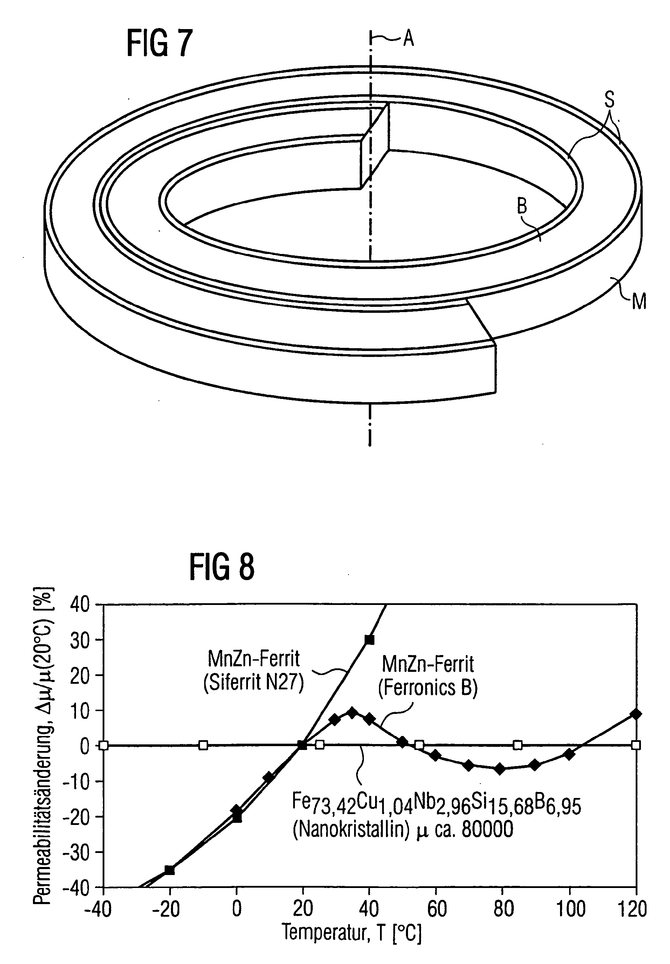

Figur 7    ist nicht maßstabsgetreu.

In einem Ausführungsbeispiel wurde ein 3 g schwerer ringförmiger Magnetkern M, der aus einem mit einer ca. 300 nm dicken isolierenden Schicht S aus Magnesiumoxid beschichtetem Band B aus einer wärmebehandelten nanokristallinen Legierung mit der Zusammensetzung $Fe_{73,42}$ $Cu_{1,04}Nb_{2,96}Si_{15,68}B_{6,95}$ besteht, mit den Abmessungen 19 x 15 x 5,2 mm und mit einem Eisenquerschnitt von $A_{fe}$ = 0,077 cm$^2$ erzeugt.

Zur Vermeidung von Wickelspannungen wurde beim Wickeln des Bandes B zum Magnetkern M darauf geachtet, daß die Zugkraft des Bandes B mit zunehmender Bandlagenzahl kontinuierlich zurückgeht. Damit wird erreicht, daß das tangential am Magnetkern M angreifende Drehmoment über den gesamten Radius des Magnetkerns M konstant bleibt und nicht mit wachsendem Radius größer wird.

Zur Erzielung der geforderten Magneteigenschaften wurde der Magnetkern M bei 572˚C vorbehandelt, wodurch sich infolge der Ausbildung der nanokristallinen Zweiphasenstruktur der Betrag der Sättigungsmagnetostriktion von $\lambda_s$ ≈ 24 ppm auf 0,16 ppm reduzierte. Die Aufheizrate wurde zwischen 450 ˚C und 520 ˚C von z.B. 10 K/min auf 1 K/min reduziert. Nachdem der Kern z.B. für 1 Stunde auf 572˚C gehalten wurde, wurde er wieder abgekühlt.

Zur Einstellung der für flache lineare Hystereseschleifen (F-Schleifen) notwendigen uniaxialen Queranisotropie $K_u$ wurde der Magnetkern M in einer weiteren Wärmebehandlung für 3,5 Stunden bei einer Temperatur von 382 ˚C getempert. Zur Ausrichtung der magnetischen Vorzugsrichtung, d.h. zur Erzeugung einer Anisotropieachse A wurde quer zur späteren Magnetisierungsrichtung ein äußeres Magnetfeld (H > 1000 A/cm) angelegt, das transversal zur Richtung des gewickelten Bandes B steht (siehe Figur 7). Das Magnetfeld war also parallel zur Anisotropieachse A.

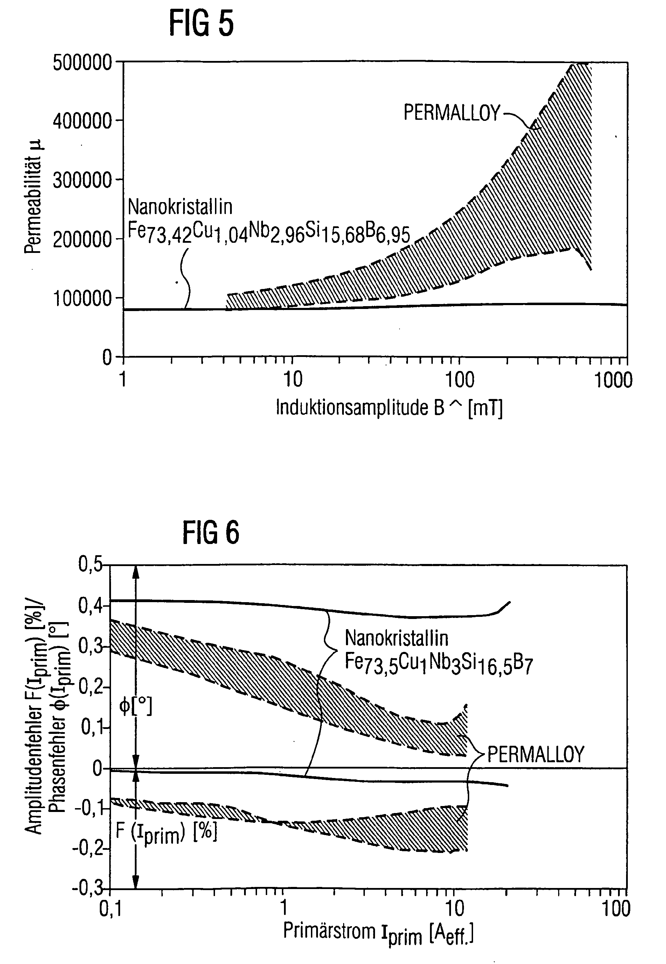

Die magnetischen Eigenschaften des zweiteilig wärmebehandelten Magnetkerns M geht aus Fig. 5 hervor, wobei die Permeabilität im Gegensatz zu konventionellen kristallinen Permalloy-Kernen über einen weiten Aussteuerungsbereich hinweg nahezu konstant auf dem hohen Wert $\mu$ ≈ 82.000 lag. Dies wurde möglich, da einerseits die eingesetzte Legierung eine hohe Sättigungsinduktion von ca. 1,2 Tesla besitzt und andererseits das statische Verhältnis Remanenz- zu Sättigungsinduktion infolge der durch die Vorbehandlung hinreichend stark reduzierten Sättigungsmagnetostriktion sowie einer geringen effektiven Rauhtiefe ($R_{a(eff)}$ ≈ 2,9 %) mit $B_r/B_m$ = 2,6 % ausreichend klein war.

Der Magnetkern M wurde zu einem Stromwandler weiterverarbeitet. Der Stromwandler wies eine Primärwindungszahl $N_1$ von 3 und eine Sekundärwindungszahl $N_2$ von 2000 auf und war über einen Bürdenwiderstand von 100 Ohm niederohmig im Sekundärstromkreis abgeschlossen. Die anwendungsrelevanten Größen Amplitudenfehler F und Phasenfehler $\varphi$ gehen aus Fig. 6 hervor. Bedingt durch die ausgeprägte Linearität und hohe Permeabilität der Hystereseschleife sind beide Größen betragsmäßig klein und ihre Aussteuerungsabhängigkeit vergleichsweise gering ist. Der mittlere Phasenwinkel $\varphi$ beträgt 0,40˚. Eine Linearität des Phasenwinkels $\Delta\varphi$ über einen Strombereich von 0,1 bis 2 A beträgt weniger als 0,04˚.

Der Magnetkern M wies eine hervorragende Alterungsbeständigkeit bis zu 150˚C auf. Darüber hinaus zeigt Fig. 8 die hervorragend kleine Temperaturabhängigkeit des aus besagter nanokristalliner Legierung hergestellten Magnetkerns M, wobei sich gerade das eingestellte Permeabilitätsniveau um 80000 besonders auszeichnet.

Insgesamt war dieses Glühergebnis praktisch unabhängig davon, ob die beschriebene Wärmebehandlung als zwei unabhängige Teilschritte oder in einem einzigen Ablauf durchgeführt wurde.

Zur noch vollständigeren Reduzierung der Magnetostriktion wurde die thermische Vorbehandlung versuchsweise bei $T_x$= 600 ˚C durchgeführt. Das Glühergebnis war allerdings deutlich schlechter, denn im Gegensatz zu den oben beschriebenen hervorragenden Linearitätseigenschafen besaß die Schleife jetzt plötzlich ein hohes Remanenzverhältnis von $B_r/B_m$ = 23,5 %, wobei die Anfangspermeabilität nur noch bei $\mu_4$ ≈ 48.000 lag.

Nach einer Vorbehandlung bei $T_x$ = 520 ˚C reagierten die Magneteigenschaften des Magnetkerns infolge zu hoher Sättigungsmagnetostriktion sehr empfindlich auf mechanisch verspannende Einflüsse jeglicher Art. Dabei wuchs das Remanenzverhältnis bereits bei schwachen mechanischen Manipulationen von 6 % auf 20 % oder mehr an. Demzufolge war eine Verkapselung oder Kunststoffbeschichtung und damit die technologische Weiterverarbeitung des Magnetkerns zum Stromwandlerbauelement nicht mehr möglich.

Wurde dagegen die Vorbehandlungstemperaur von $T_x$ = 572 ˚C beibehalten, aber die Temperatur der Feldwärmebehandlung auf 440 ˚C erhöht, behielt die Hystereseschleife zwar ihre hervorragende Linearität mit einem Remanenzverhältnis von jetzt $B_r/B_m$ = 2,4 %, aber ihre Anfangspermeabilität lag aufgrund einer zu hohen uniaxialen Anisotropieenergie $K_u$ nur noch bei $\mu_4$ ≈ 56.000.

**Patentansprüche**

**1.** Magnetkern für einen Stromwandler

- der aus einem gewickelten Band (B) aus einer ferromagnetischen Legierung besteht, bei der mindestens 50% des Volumens der Legierung durch feine kristalline Teilchen mit einer mittleren Teilchengröße von 100nm oder weniger eingenommen wird (nanokristalline Legierung),
- der eine Permeabilität aufweist, die größer als 12000 und kleiner als 300000 ist
- der eine Sättigungsmagnetostriktion aufweist, deren Betrag kleiner als 1 ppm ist,
- der im wesentlichen frei von mechanischer Spannung ist
- der eine Anisotropieachse (A) aufweist, entlang der sich die Magnetisierung des Magnetkerns (M) besonders leicht ausrichtet und die senkrecht zu einer Ebene ist, in der eine Mittellinie des Bandes (B) verläuft, wobei die Legierung eine Zusammensetzung aufweist, die im Wesentlichen aus der Formel

$$Fe_aCO_bCU_cSI_dB_eM_f$$

Besteht, worin M zumindest eines der Elemente V, Nb, Ta, Ti, Mo, W, Zr und Hf ist, a, b, c, d, e, f in Atom-% angegeben sind, und wobei a, b, c, d, e und f die folgenden Bedingungen erfüllen:
$0,5 \leq c \leq 2$; $6,5 \leq d \leq 18$; $5 \leq e \leq 14$; $1 \leq f \leq 6$; mit $d + e > 18$ und $0 \leq b \leq 15$, wobei
$a + b + c + d + e + f = 100$ sind und
**dadurch gekennzeichnet, dass** das Band (B) eine Rauhtiefe $R_a$ (eff.) kleiner als 7% aufweist.

2. Magnetkern nach Anspruch 1,
**dadurch gekennzeichnet, dass**
a, b, c, d, e und f die folgenden Bedingungen erfüllen: $c = 1$; $14 \leq d \leq 17$; $5 \leq e \leq 14$; $2 \leq f \leq 4$; $0 \leq b \leq 0,5$; mit $22 < d + e \leq 24$.

3. Magnetkern nach Anspruch 2,
**dadurch gekennzeichnet,**
**dass** der Betrag der Sättigungsmagnetostriktion kleiner als 0,2 ppm ist.

4. Magnetkern nach einem der Ansprüche 1 bis 3,
**dadurch gekennzeichnet,**
**dass** der Magnetkern (M) eine Sättigungsmagnetisierung $B_s$ von 1,1 bis 1,4 T aufweist.

5. Magnetkern nach einem der Ansprüche 1 bis 4,
**dadurch gekennzeichnet,**
**dass** das Band (B) zumindest an einer Oberfläche mit einer elektrisch isolierenden Schicht (S) versehen ist.

6. Magnetkern nach Anspruch 5,
**dadurch gekennzeichnet,**
**dass** als elektrisch isolierende Schicht (S) eine Schicht aus Magnesiumoxid vorgesehen ist.

7. Magnetkern nach Anspruch 6,
**dadurch gekennzeichnet,**
**dass** die elektrisch isolierende Schicht (S) eine Dicke (D) von 25 nm $\leq$ D $\leq$ 3 um aufweist.

8. Magnetkern nach einem der Ansprüche 1 bis 7
**dadurch gekennzeichnet,**
**dass** er als ein geschlossener, luftspaltloser Ringkern, Ovalkern oder Rechteckkern ausgestaltet ist.

9. Magnetkern nach einem der Ansprüche 1 bis 8,
**dadurch gekennzeichnet,**
**dass** das Verhältnis seines mechanischen elastischen Spannungstenors multipliziert mit der Sättigungsmagnetostriktion zu seiner uniaxialen Anisotropie kleiner als 0,5 ist.

10. Stromwandler für Wechselstrom mit einem Magnetkern nach einem der Ansprüche 1 bis 9, wobei der Stromwandler neben dem Magnetkern (M) als Wandlerkern aus zumindest einer Primärwicklung und zumindest einer Sekundärwicklung, zu der ein Bürdenwiderstand parallel geschaltet ist und der den Sekundärstromkreis niederohmig abschließt, besteht.

11. Stromwandler nach Anspruch 10,

**dadurch gekennzeichnet, dass** die Sekundärwicklung eine Windungszahl $N_{sec} \leq 2200$ aufweist, wobei die Primärwicklung eine Windungszahl $N_{prim} = 3$ aufweist und der Stromwandler für einen Primärstrom $I_{prim} \leq 20$ A ausgelegt ist.

**12.** Verfahren zur Herstellung eines Magnetkerns nach einem der Ansprüche 1 bis 11,

- bei dem nach Herstellung und Wicklung des Bandes (B) zum Magnetkern (M), der Magnetkern (M) auf eine Zieltemperatur zwischen 450˚C und 600˚C erhitzt wird,
- bei dem der Magnetkern (M) bei einer Temperatur unterhalb der Curie-Temperatur der Legierung für 0,1 bis 8 Stunden bei Temperaturen zwischen 260˚C und 590˚C einem Magnetfeld von mehr als 100 A/cm ausgesetzt wird, das parallel zur auszubildenden Anisotropieachse (A) des Magnetkerns (M) ist.

**13.** Verfahren nach Anspruch 12,

- bei dem das Erhitzen auf die Zieltemperatur mit einer Rate zwischen 0,5 bis 15 K/min erfolgt,
- bei dem der Magnetkern (M) zwischen 4 Minuten und 8 Stunden auf der Zieltemperatur gehalten wird.

**14.** Verfahren nach einem der Ansprüche 12 bis 13,

- bei dem das Band (B) vor dem Wickeln an mindestens einer seiner beiden Oberflächen mit einer elektrisch isolierenden Schicht (S) vorgesehen wird.

**15.** Verfahren nach einem der Ansprüche 12 bis 14,

- bei dem der Magnetkern (M) vor Erhitzen auf die Zieltemperatur einer Tauchisolation unterzogen wird, so dass das Band (B) mit einer elektrisch isolierenden Schicht (S) versehen wird.

**16.** Verfahren nach einem der Ansprüche 12 bis 15,

- bei dem zumindest während der Behandlung im Magnetfeld mehrere gleiche Magnetkerne (M) strinseitig derart übereinander gestapelt sind, dass eine Stapelhöhe das Mehrfache des Außendurchmessers des Magnetkerns (M) beträgt.

**17.** Verfahren nach einem der Ansprüche 12 bis 16,

- bei dem der Magnetkern (M) mit Raten von 0,1 bis 5 K/min auf Raumtemperatur abgekühlt wird.

**Claims**

**1.** Magnetic core for a current transformer

- which consists of a wound strip (B) made of a ferromagnetic alloy, in which at least 50 % of the volume of the alloy is taken up by fine crystalline particles with an average particle size of 100 nm or less (nanocrystalline alloy),
- which displays permeability higher than 12000 and lower than 300000,
- which displays saturation magnetostriction the magnitude of which is less than 1 ppm,
- which is essentially free of mechanical stress,
- which has an anisotropy axis (A) along which the magnetisation of the magnetic core (M) is aligned in a particularly simple manner and which is perpendicular to a plane in which a centre line of the strip (B) extends, the alloy having a composition consisting essentially of the formula

$$Fe_aCo_bCu_cSi_dB_eM_f,$$

where M is at least one of the elements V, Nb, Ta, Ti, Mo, W, Zr and Hf, a, b, c, d, e and f are specified in atomic % and a, b, c, d, e and f satisfy the following conditions:
$0.5 \leq c \leq 2$; $6.5 \leq d \leq 18$; $5 \leq e \leq 14$; $1 \leq f \leq 6$, with $d + e > 18$ and $0 \leq b \leq 15$, where $a + b + c + d + e + f = 100$, **characterised in that** the strip (B) has a roughness depth $R_{a(eff)}$ of less than 7 %.

**2.** Magnetic core according to claim 1, **characterised in that** a, b, c, d, e and f satisfy the following conditions: c = 1; $14 \leq d \leq 17$; $5 \leq e \leq 14$; $2 \leq f \leq 4$; $0 \leq b \leq 0.5$, with $22 < d + e \leq 24$.

**3.** Magnetic core according to claim 2, **characterised in that** the magnitude of the saturation magnetostriction is less than 0.2 ppm.

**4.** Magnetic core according to one of claims 1 to 3, **characterised in that** the magnetic core (M) displays saturation magnetisation $B_s$ of 1.1 to 1.4 T.

**5.** Magnetic core according to one of claims 1 to 4, **characterised in that** the strip (B) is provided at least on one surface with an electrically insulating layer (S).

**6.** Magnetic core according to claim 5, **characterised in that** a layer of magnesium oxide is provided as the electrically insulating layer (S).

**7.** Magnetic core according to claim 6, **characterised in that** the electrically insulating layer (S) has a thickness (D) of $25 \, nm \leq D \leq 3 \, \mu m$.

**8.** Magnetic core according to one of claims 1 to 7, **characterised in that** it is designed as a closed toroidal core, oval core or rectangular core without an air gap.

**9.** Magnetic core according to one of claims 1 to 8, **characterised in that** the ratio of its mechanical elastic stress tensor multiplied by the saturation magnetostriction to its uniaxial anisotropy is less than 0.5.

**10.** Current transformer for alternating current comprising a magnetic core according to one of claims 1 to 9, in which, in addition to the magnetic core (M) serving as a transformer core, the current transformer consists of at least one primary winding and at least one secondary winding to which a brush resistor is connected in parallel and closes the secondary circuit with low resistance.

**11.** Current transformer according to claim 10, **characterised in that** the secondary winding has $N_{sec} \leq 2200$ turns, the primary winding having $N_{prim} = 3$ turns and the current transformer being designed for a primary current $I_{prim} \leq 20 \, A$.

**12.** Process for the production of a magnetic core according to one of claims 1 to 11,

> - in which, after the production and winding of the strip (B) into the magnetic core (M), the magnetic core (M) is heated to a target temperature of between 450°C and 600°C and
> - in which the magnetic core (M) is subjected to a magnetic field of more than 100 A/cm parallel to the anisotropy axis (A) of the magnetic core (M) to be formed at a temperature below the Curie temperature of the alloy for 0.1 to 8 hours at temperatures of between 260°C and 590°C.

**13.** Process according to claim 12,

> - in which the heating to the target temperature is effected at a rate of between 0.5 and 15 K/min and
> - in which the magnetic core (M) is kept at the target temperature for between 4 minutes and 8 hours.

**14.** Process according to one of claims 12 to 13,

> - in which, before it is wound, the strip (B) is provided on at least one of its two surfaces with an electrically insulating layer (S).

**15.** Process according to one of claims 12 to 14,

> - in which the magnetic core (M) is subjected to dip encapsulation before it is heated to the target temperature so that the strip (B) is provided with an electrically insulating layer (S).

**16.** Process according to one of claims 12 to 15,

> - in which, at least during the treatment in the magnetic field, a plurality of identical magnetic cores (M) are stacked one on top of the other via their end faces in such a manner that the height of a stack is a multiple of the external diameter of the magnetic core (M).

17. Process according to one of claims 12 to 16,

   - in which the magnetic core (M) is cooled to room temperature at rates of 0.1 to 5 K/min.


**Revendications**

1. Noyau magnétique pour un transformateur de courant,

   - réalisé à partir d'un ruban (B) enroulé en alliage ferromagnétique dont 50 % du volume sont occupés par des particules cristallines fines avec une granulométrie moyenne de 100 nm ou moins (alliage nanocristallin),
   - présentant une perméabilité supérieure à 12000 et inférieure à 300000,
   - présentant une magnétostriction de saturation dont le montant est inférieur à 1 ppm,
   - pour l'essentiel exempt de contrainte mécanique,
   - avec un axe d'anisotropie (A) le long duquel la magnétisation du noyau magnétique (M) s'oriente particulièrement facilement et qui est perpendiculaire à un plan dans lequel s'étend une ligne médiane du ruban (B), l'alliage présentant une composition pour l'essentiel selon la formule

$$Fe_aCO_bCU_cSI_dB_eM_f$$

   dans laquelle M est au moins l'un des éléments V, Nb, Ta, Ti, Mo, W, Zr et Hf, a, b, c, d, e, f sont indiqués en % d'atomes, et a, b, c, d, e et f remplissent les conditions suivantes :
   $0,5 \leq c \leq 2$ ; $6,5 \leq d \leq 18$ ; $5 \leq e \leq 14$ ; $1 \leq f \leq 6$ ; avec $d + e > 18$ et $0 \leq b \leq 15$,
   $a + b + c + d + e + F$ étant = 100,
   **caractérisé en ce que**
   le ruban (B) présente une rugosité $R_a$ (eff.) inférieure à 7 %.

2. Noyau magnétique selon la revendication 1,
   **caractérisé en ce que**
   a, b, c, d, e et f remplissent les conditions suivantes :
   $c = 1$ ; $14 \leq d \leq 17$ ; $5 \leq e \leq 14$ ; $2 \leq f \leq 4$ ; $0 \leq b \leq 0,5$ ; avec $22 < d + e \leq 24$.

3. Noyau magnétique selon la revendication 2,
   **caractérisé en ce que**
   le montant de la magnétostriction de saturation est inférieur à 0,2 ppm.

4. Noyau magnétique selon l'une quelconque des revendications 1 à 3,
   **caractérisé en ce que**
   le noyau magnétique (M) présente une magnétisation de saturation $B_s$ de 1,1 à 1,4 T.

5. Noyau magnétique selon l'une quelconque des revendications 1 à 4,
   **caractérisé en ce que**
   le ruban (B) est muni au moins sur une surface d'une couche (S) électriquement isolante.

6. Noyau magnétique selon la revendication 5,
   **caractérisé en ce qu'**
   une couche en oxyde de magnésium est prévue comme couche (S) électriquement isolante.

7. Noyau magnétique selon la revendication 6,
   **caractérisé en ce que**
   la couche (S) électriquement isolante présente une épaisseur (D) de $25 \text{ nm} \leq D \leq 3 \leq \mu m$.

8. Noyau magnétique selon l'une quelconque des revendications 1 à 7,
   **caractérisé en ce qu'**

il présente la forme d'un noyau annulaire, d'un noyau ovale ou d'un noyau rectangulaire fermé sans entrefer.

9. Noyau magnétique selon l'une quelconque des revendications 1 à 8,
   **caractérisé en ce que**
   le rapport entre son tenseur de contraintes mécanique élastique multiplié par la magnétostriction de saturation par rapport à son anisotropie uniaxiale est inférieur à 0,5.

10. Transformateur de courant pour courant alternatif comprenant un noyau magnétique selon l'une quelconque des revendications 1 à 9, qui outre le noyau magnétique (M) comme noyau de transformateur comprend au moins un bobinage primaire et au moins un bobinage secondaire qui est monté parallèlement à une résistance de charge et ferme le circuit de courant secondaire à faible résistance.

11. Transformateur de courant selon la revendication 10,
    **caractérisé en ce que**
    le bobinage secondaire présente un nombre de spires $N_{sec} \leq 2200$, le bobinage primaire présente un nombre de spires $N_{prim} = 3$ et le transformateur de courant est conçu pour un courant primaire $I_{prim} \leq 20$ A.

12. Procédé de fabrication d'un noyau magnétique selon l'une quelconque des revendications 1 à 11, dans lequel

    - après la fabrication et l'enroulement du ruban (B) le noyau magnétique (M) est chauffé à une température cible comprise entre 450°C et 600°C pour former le noyau magnétique (M),
    - le noyau magnétique (M) est exposé pendant 0,1 à 8 heures à des températures entre 260°C et 590°C à une température de l'alliage inférieure à la température Curie, à un champ magnétique supérieur à 100 A/cm qui s'étend parallèlement à l'axe d'anisotropie (A) à former du noyau magnétique (M).

13. Procédé selon la revendication 12, dans lequel

    - le chauffage à la température cible s'effectue à un taux entre 0,5 à 15 K/min,
    - le noyau magnétique (M) est maintenu à la température cible entre 4 minutes et 8 heures.

14. Procédé selon l'une quelconque des revendications 12 ou 13, dans lequel

    - avant l'enroulement, le ruban (B) est muni d'une couche (S) électriquement isolante sur au moins l'une de ses deux surfaces.

15. Procédé selon l'une quelconque des revendications 12 à 14, dans lequel

    - avant le chauffage à la température cible, le noyau magnétique (M) est soumis à une isolation par immersion pour ainsi munir le ruban (B) d'une couche (S) électriquement isolante.

16. Procédé selon l'une quelconque des revendications 12 à 15, dans lequel

    - au moins pendant le traitement dans le champ magnétique, plusieurs noyaux magnétiques (M) identiques sont superposés côté frontal de sorte qu'une hauteur de pile est le multiple du diamètre extérieur du noyau magnétique (M).

17. Procédé selon l'une quelconque des revendications 12 à 16, dans lequel

    - le noyau magnétique (M) est refroidi à la température ambiante à des vitesses de 0,1 à 5 K/min.

## FIG 1

Typische Daten:

$N_{prim}$ : 1...6
$I_{prim}$ : 5 $A_{eff}$..120$A_{eff}$ (max.)
$N_{sec}$ : 500 ...4000
$I_{sec} \approx -I_{prim} * N_{prim} / N_{sec}$
$R_B$ : 1$\Omega$ ...200 $\Omega$ (Bürde)
$R_{cu}$ : 1$\Omega$...200 $\Omega$ (Wicklung)
$U_{signal}$ : 300 m$V_{eff}$ (max.)
Frequenz : 50 / 60 Hz

$$\frac{B}{\mu\mu_0 \hat{H}_{prim}}$$

## FIG 2

Ansteuerfeld :
$H_{prim} = N_{prim} I_{prim} / l_{Fe}$

Wandlerfeld :
$H_{sec} = N_{sec} I_{sec} / l_{Fe}$

Flußdichte im Wandlerkern :
$B = \mu\mu_0 (H_{prim} + H_{sec})$

$\varphi$
Phasenfehler

## FIG 3

## FIG 4

## FIG 5

Permeabilität $\mu$ vs. Induktionsamplitude $B^\wedge$ [mT]

Nanokristallin $Fe_{73,42}Cu_{1,04}Nb_{2,96}Si_{15,68}B_{6,95}$

PERMALLOY

## FIG 6

Amplitudenfehler $F(I_{prim})$ [%]/ Phasenfehler $\phi(I_{prim})$ [°] vs. Primärstrom $I_{prim}$ [$A_{eff.}$]

Nanokristallin $Fe_{73,5}Cu_1Nb_3Si_{16,5}B_7$

PERMALLOY

$\phi$[°]

$F(I_{prim})$ [%]

## FIG 7

## FIG 8